# EUROPÄISCHE PATENTSCHRIFT

(11) **EP 2 949 532 B1**
(45) Veröffentlichungstag und Bekanntmachung des Hinweises auf die Patenterteilung: **01.06.2022**
(21) Anmeldenummer: 15000836.5
(22) Anmeldetag: 20.03.2015
(51) Int. Cl.: B60W 40/12, B60R 1/00, G01B 11/02, G01B 11/24, B60W 40/13, G01C 11/36

(54) **VERFAHREN ZUR UNTERSTÜTZUNG EINES FAHRERS EINES NUTZFAHRZEUGES**
METHOD FOR ASSISTING A DRIVER OF A COMMERCIAL VEHICLE
PROCÉDÉ POUR L'ASSISTANCE D'UN CONDUCTEUR DE VÉHICULE UTILITAIRE

(30) Priorität: 27.05.2014 DE 102014007897
(43) Veröffentlichungstag der Anmeldung: 02.12.2015
(73) Patentinhaber: MAN Truck & Bus SE, 80995 München (DE)
(72) Erfinder: Römersperger, Xaver, 81543 München (DE); Dörner, Karlheinz, 85757 Karlsfeld (DE); Schwertberger, Walter, 82278 Althegnenberg (DE); Kraus, Sven, 85748 Garching (DE); Reule, Michael, 85354 Freising (DE)
(74) Vertreter: Liebl, Thomas

(56) Entgegenhaltungen:
- WO-A1-2004/020938
- WO-A1-2008/064892
- WO-A1-2014/037064
- DE-A1-102010 006 323
- US-A1- 2006 244 579
- US-A1- 2013 027 195
- US-A1- 2014 055 253

## Beschreibung

Die Erfindung betrifft ein Verfahren zur Unterstützung eines Fahrers eines Nutzfahrzeuges nach Patentanspruch 1, und ein Nutzfahrzeug-Gespann nach Patentanspruch 9.

Moderne Nutzfahrzeuge weisen regelmäßig eine Reihe von Fahrerassistenzsystemen auf, die einen Fahrer des Nutzfahrzeuges unterstützen sollen. Diese Fahrerassistenzsysteme sind dabei häufig derart ausgebildet, dass mittels diesen nützliche Informationen an den Fahrer ausgeben werden.

Beispielsweise ist es bekannt, Kamerasysteme an einem Nutzfahrzeug anzubringen, die derart ausgebildet sind, dass sie für den auf dem Fahrersitz des Nutzfahrzeuges befindlichen Fahrer nicht sichtbare bzw. nur schwer einsehbare Bereiche, insbesondere Totwinkelbereiche, in der Umgebung des Nutzfahrzeuges erfassen. Die Aufnahmen bzw. Bilder dieser Kamerasysteme können beispielsweise an den Fahrer des Nutzfahrzeuges ausgegeben werden und so zu einer Verbesserung der Verkehrssicherheit beitragen.

Aus der WO 2008/064892 A1 ist ein Verfahren zur Bestimmung einer Position eines zweiachsigen Anhängers mit zumindest einer beweglichen Radachse relativ zu einem Zugfahrzeug bekannt. Das dort offenbarte Nutzfahrzeug-Gespann weist hierfür eine Bild-Erfassungseinrichtung auf, wobei aus den mittels dieser erfassten Bildern mittels einer Bild-Verarbeitungsvorrichtung eine Abmessungs-Kenngröße des Nutzfahrzeuges extrahiert wird. Die besagte Bild-Erfassungseinrichtung ist hierbei dem Zugfahrzeug zugeordnet und in Fahrzeug-Längsrichtung gesehen, derart nach hinten ausgerichtet, dass der Anhänger im Bild erfasst wird.

Aufgabe der Erfindung ist es, ein Verfahren zur Unterstützung eines Fahrers eines Nutzfahrzeuges und ein Nutzfahrzeug-Gespann bereitzustellen, mittels denen auf besonders einfache Weise die Verkehrssicherheit und/oder der Fahrerkomfort erhöht wird.

Diese Aufgabe wird durch die Merkmale der unabhängigen Ansprüche gelöst. Bevorzugte Weiterbildungen sind in den Unteransprüchen offenbart.

Die Erfindung betrifft ein Verfahren zur Unterstützung eines Fahrers eines Nutzfahrzeuges, wobei das Nutzfahrzeug wenigstens eine, insbesondere in Fahrzeug-Längsrichtung ausgerichtete, Bild-Erfassungseinrichtung, insbesondere wenigstens eine Kamera aufweist. Erfindungsgemäß wird aus den mittels der Bild-Erfassungseinrichtung erfassten Bildern mittels einer Bild-Verarbeitungsvorrichtung wenigstens eine Abmessung- oder Aufbau- und/oder Ladungs-Kenngröße des Nutzfahrzeuges, insbesondere eines Zugfahrzeuges und/oder eines Anhängers/Aufliegers eines Nutzfahrzeug-Gespanns, extrahiert.

Auf diese Weise ist es möglich, auf besonders einfache Weise relevante Abmessungsund/oder Aufbau- und/oder Ladungs-Kenngrößen eines Nutzfahrzeuges, beispielsweise eines Lastkraftwagens, zu ermitteln. Diese Kenngrößen können beispielsweise an den Fahrer des Nutzfahrzeuges ausgegeben werden, so dass dieser stets über relevante Kenngrößen des Nutzfahrzeuges informiert ist. Dadurch werden der Fahrerkomfort und vor allem die Verkehrssicherheit deutlich erhöht. Die wenigstens eine Bild-Erfassungseinrichtung kann dabei vorzugsweise eine ursprünglich für einen anderen Zweck an das Nutzfahrzeug angebrachte Bild-Erfassungsvorrichtung sein, um die wenigstens eine Kenngröße besonders einfach und kostengünstig ermitteln zu können. Alternativ und/oder zusätzlich kann die wenigstens eine Bild-Erfassungseinrichtung natürlich auch eine speziell für die Ermittlung der wenigstens einen Kenngröße am Nutzfahrzeug angebrachte Bild-Erfassungseinrichtung sein.

Für eine besonders genaue und zuverlässige Ermittlung der wenigstens einen Kenngröße ist es zudem vorteilhaft, die wenigstens eine Kenngröße aus mehreren durch die wenigstens eine Bild-Erfassungseinrichtung erfassten Bildern zu ermitteln. Mittels der Bild-Verarbeitungseinrichtung kann dann eine statistische Auswertung der aus den einzelnen Bildern ermittelten Werte durchgeführt werden.

Erfindungsgemäß ist das Nutzfahrzeug ein Nutzfahrzeug-Gespann mit einem Zugfahrzeug und einem damit gekoppelten Anhänger/Auflieger, wobei die wenigstens eine Bild-Erfassungseinrichtung dem Zugfahrzeug zugeordnet ist, und wobei die wenigstens eine Bild-Erfassungseinrichtung, in Fahrzeug-Längsrichtung gesehen, derart nach hinten ausgerichtet ist, dass der Anhänger/Auflieger in wenigstens einem Teil der möglichen Fahrstellungen zumindest teilweise im Bild erfasst wird. Auf diese Weise wird eine zuverlässige Erfassung des Anhängers/Aufliegers im Bild sichergestellt.

Erfindungsgemäß ist eine Abmessung-Kenngröße die Länge des Anhängers/Aufliegers, wobei diese dergestalt ermittelt wird, das eine, in Fahrzeug-Längsrichtung gesehen, hintere vertikale Außenkante des Anhängers/Aufliegers von einer Bild-Erfassungseinrichtung im Bild erfasst wird, und dass mittels der Bild-Verarbeitungseinrichtung aus dem geometrischen Zusammenhang der Position der Außenkante im Bild und dem während der Erfassung des Bildes gefahrenen Kurvenradius die Länge des Anhängers/Aufliegers ermittelt wird. So kann die Länge des Anhängers/Aufliegers besonders zuverlässig und einfach ermittelt werden. Alternativ kann anstatt dem gefahrenen Kurvenradius auch der relative Gierwinkel zwischen Zugfahrzeug und Anhänger/Auflieger zur Ermittlung der Länge des Anhängers/Aufliegers verwendet werden. Dieser Gierwinkel kann ebenfalls mittels der Bildverarbeitungsvorrichtung aus den Bildern einer Bild-Erfassungseinrichtung ermittelt werden. Weiter alternativ kann die Bild-Erfassungseinrichtung als Stereokamera ausgebildet sein, wodurch zur Ermittlung der Länge des Anhängers/Aufliegers auf den Wert des gefahrenen Kurvenradius bzw. des relativen Gierwinkels verzichtet werden kann.

Eine weitere Kenngröße kann die Höhe des Anhängers/Aufliegers sein, wobei diese dergestalt ermittelt wird, dass ein, in Fahrzeughochrichtung gesehen, oberer Endbereich einer, in Fahrzeuglängsrichtung gesehen, hinteren vertikalen Außenkante des Anhängers/Aufliegers oder ein oberer hinterer Eckbereich des Anhängers/Aufliegers von einer Bild-Erfassungseinrichtung erfasst wird, und das mittels der Bild-Verarbeitungseinrichtung aus der Höhenposition der Bild-Erfassungseinrichtung relativ zur Fahrbahn, des während der Erfassung des Bildes gefahrenen Kurvenradius, der Länge des Anhängers/Aufliegers und der Position des Außenkanten-Endbereichs oder des Anhängers/Auflieger-Eckbereichs im Bild die Höhe des Anhängers/Aufliegers ermittelt wird. Dadurch wird auch eine besonders einfache und zuverlässige Ermittlung der Höhe des Anhängers/Aufliegers gewährleistet. Alternativ kann auch hier anstatt dem gefahrenen Kurvenradius der relative Gierwinkel zwischen Zugfahrzeug und Anhänger/Auflieger oder eine Stereokamera verwendet werden.

Ist die Höhenposition der Bild-Erfassungseinrichtung relativ zur Fahrbahn nicht vorbekannt, kann diese bevorzugt dergestalt ermittelt werden, dass die Fahrbahn im Bild einer Bild-Erfassungseinrichtung erfasst wird, und dass mittels der Bild-Verarbeitungseinrichtung die Höhenposition der die Fahrbahn im Bild erfassenden Bild-Erfassungseinrichtung relativ zur Fahrbahn ermittelt wird, wobei im Falle mehrerer Bild-Erfassungseinrichtung ausgehend von derjenigen Bild-Erfassungseinrichtung, deren Höhenposition bekannt ist, mittels bekannter geometrischer Lagebeziehungen zwischen den einzelnen Bild-Erfassungseinrichtungen die Höhenposition der wenigstens einen weiteren Bild-Erfassungseinrichtung ermittelt werden kann. So kann die Höhenposition der wenigstens einen Bild-Erfassungseinrichtung relativ zur Fahrbahn einfach und präzise ermittelt werden.

Eine weitere aus den Bildern extrahierbare Kenngröße kann die Art des Anhängers/Aufliegers sein, wobei diese dergestalt ermittelt wird, dass der Anhänger/Auflieger, in Fahrzeug-Querrichtung gesehen, in Seitenansicht von einer Bild-Erfassungseinrichtung ein Bild erfasst wird, und dass mittels der Bild-Verarbeitungseinrichtung durch Abgleich dieses Bildes mit hinterlegten Erkennungsmustern die Art des Anhängers/Aufliegers ermittelt wird. Auf diese Weise kann die Art des Anhängers/Aufliegers (beispielsweise Kofferaufbau, Tankauflieger, Container-Auflieger, Autotransport-Auflieger oder Muldenkipper) besonders zuverlässig und einfach ermittelt werden.

Eine Aufbau-Kenngröße kann die Anzahl der Achsen des Anhängers/Aufliegers sein, wobei diese dergestalt ermittelt wird, dass wenigstens die, in Fahrzeug-Querrichtung gesehen, an einer Seite des Anhängers/Aufliegers angeordneten Räder des Anhängers/Aufliegers von einer Bild-Erfassungseinrichtung im Bild erfasst werden, und dass mittels der Bild-Verarbeitungseinrichtung die Anzahl der Räder auf zumindest einer Seite des Anhängers/Aufliegers im Bild erkannt und ausgehend von dieser Anzahl die Anzahl der Achsen des Anhängers/Aufliegers ermittelt wird. Dadurch ist eine besonders einfache Ermittlung der Anzahl der Achsen des Anhängers/Aufliegers ermöglicht.

Eine weitere Kenngröße kann die Anzahl der angehobenen Lift-Achsen des Nutzfahrzeuges sein, wobei diese dergestalt ermittelt wird, dass wenigstens die, in Fahrzeug-Querrichtung gesehen, auf einer Seite des Nutzfahrzeuges angeordneten Räder des Nutzfahrzeuges und die Fahrbahn von einer Bild-Erfassungseinrichtung im Bild erfasst werden, und dass mittels der Bild-Verarbeitungseinrichtung die Anzahl der nicht auf der Fahrbahn aufsetzenden Räder auf zumindest einer Seite des Nutzfahrzeuges im Bild erkannt und ausgehend von dieser Anzahl die Anzahl der angehobenen Lift-Achsen des Nutzfahrzeuges ermittelt wird. So kann der Fahrer des Nutzfahrzeuges besonders einfach und zuverlässig über die Anzahl der angehobenen Lift-Achsen des Nutzfahrzeuges informiert werden.

Eine weitere aus den Bildern extrahierbare Kenngröße kann die Breite des Nutzfahrzeuges und/oder der Nutzfahrzeug-Ladung sein, wobei diese dergestalt ermittelt wird, dass wenigstens ein definiertes Breiten-Bildmerkmal von einer Bild-Erfassungseinrichtung im Bild erfasst wird, und dass mittels der Bild-Verarbeitungseinrichtung nur zum Abgleich des wenigstens einen definierten Breiten-Bildmerkmals mit hinterlegten Erkennungsmustern die Breite des Nutzfahrzeugs und/oder der Nutzfahrzeug-Ladung ermittelt wird. Auf diese Weise kann die Breite des Nutzfahrzeuges und/oder der Nutzfahrzeug-Ladung auf einfache Weise ermittelt werden.

Eine Kenngröße kann ein an dem Nutzfahrzeug und/oder Nutzfahrzeug-Ladung angebrachter Hinweis zur Nutzfahrzeug-Ladung, insbesondere ein Hinweis zur Gefahrengutklasse, sein, wobei dieser dergestalt ermittelt wird, dass ein an dem Nutzfahrzeug und/oder an der Nutzfahrzeug-Ladung angebrachter Hinweis zur Nutzfahrzeug-Ladung von einer Bild-Erfassungseinrichtung im Bild erfasst wird, und dass mittels der Bild-Verarbeitungseinrichtung durch den Abgleich des Hinweises zur Nutzfahrzeug-Ladung mit hinterlegten Erkennungsmustern der Hinweis der Nutzfahrzeug-Ladung ermittelt wird. Dadurch kann der Fahrer des Nutzfahrzeugs zuverlässig über einen am Nutzfahrzeug und/oder an der Nutzfahrzeug-Ladung angebrachten Hinweis zur Nutzfahrzeug-Ladung informiert werden.

Die Erfindung betrifft zudem ein Nutzfahrzeug-Gespann nach Anspruch 9.

In einer weiteren bevorzugten Ausführungsform kann die wenigstens eine Bild-Erfassungseinrichtung, in Fahrzeug-Querrichtung gesehen, mit einem definierten Querversatz seitlich vom Zugfahrzeug abragend angeordnet sein. Dadurch ist die Erfassung des Anhängers/Aufliegers im Bild deutlich vereinfacht. Weiter bevorzugt kann die wenigstens eine Bild-Erfassungseinrichtung, in Fahrzeug-Hochrichtung gesehen, im Wesentlichen auf Höhe der Außenspiegel des Zugfahrzeugs angeordnet sein, um eine zuverlässige Erfassung des Anhängers/Aufliegers im Bild zu gewährleisten.

Die wenigstens eine Bild-Erfassungseinrichtung und die Bild-Verarbeitungsvorrichtung sind erfindungsgemäß derart ausgebildet, dass mittels diesen die Länge des Anhängers/Aufliegers und gegebenenfalls zusätzlich die Höhe des Anhängers/Aufliegers und/oder die Art des Anhängers/Aufliegers und/oder die Anzahl der Achsen des Anhängers/Aufliegers und/oder Anzahl der angehobenen Lift-Achsen des Nutzfahrzeugs und/oder die Breite des Nutzfahrzeuges und/oder die Breite der Nutzfahrzeug-Ladung und/oder wenigstens ein an das Nutzfahrzeug und/oder an der Nutzfahrzeug-Ladung angebrachter Hinweis zur Nutzfahrzeug-Ladung, insbesondere ein Hinweis zur Gefahrgutklasse, als Kenngröße des Nutzfahrzeuges ermittelt werden kann. Dadurch kann der Fahrer des Nutzfahrzeuges zuverlässig über relevante Abmessungs- und/oder Aufbau- und/oder Ladegut-Kenngrößen des Nutzfahrzeuges informiert werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Perspektivdarstellung einen Teil einer erfindungsgemäßen Sattelzugmaschine;
- Fig. 2: in einer Perspektivdarstellung einen Kameraarm der Sattelzugmaschine;
- Fig. 3: ein Bild einer Kamera, anhand dem die Länge eines Sattelaufliegers ermittelt werden kann; und
- Fig. 4: ein Bild einer Kamera , anhand dem die Höhe eines Sattelaufliegers ermittelt werden kann.

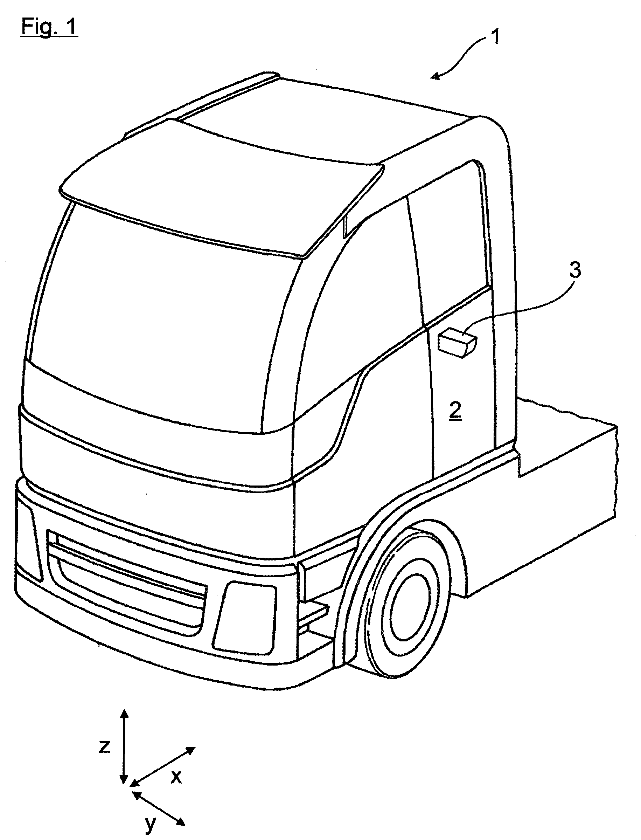

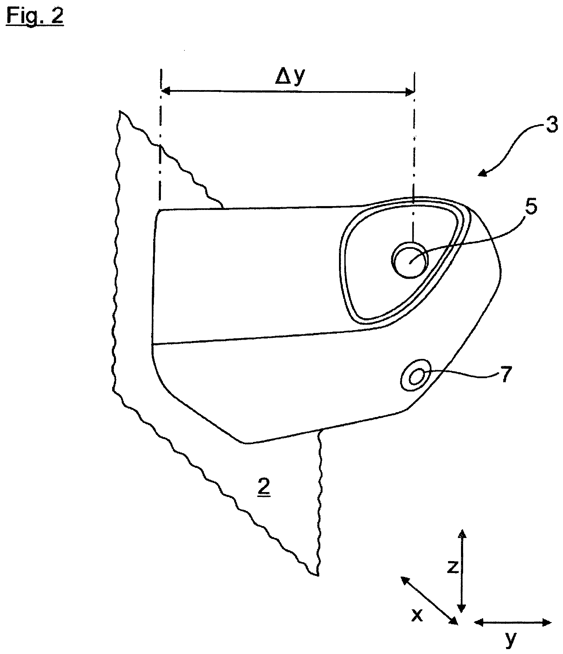

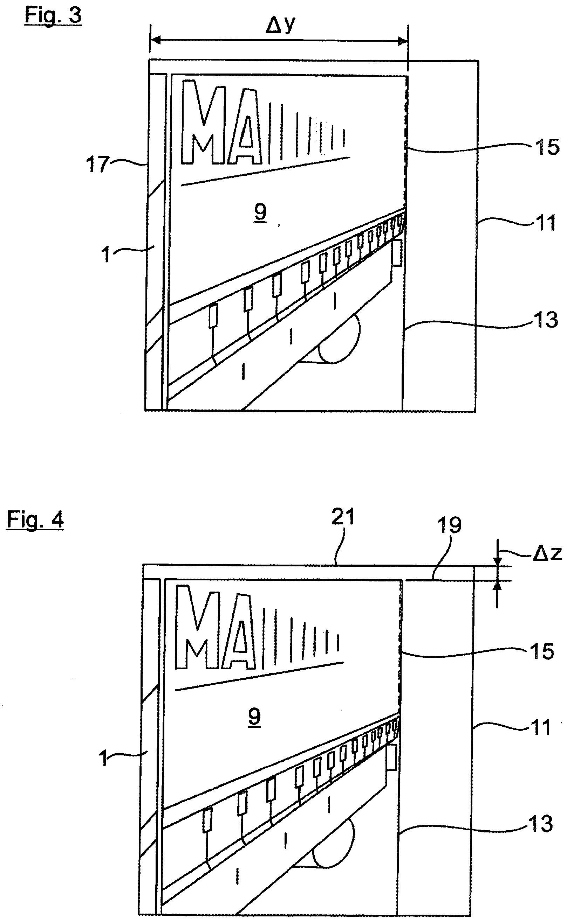

In Fig. 1 ist eine erfindungsgemäße Sattelzugmaschine 1 schematisch gezeigt. Die Sattelzugmaschine 1 weist, in Fahrzeug-Querrichtung y gesehen, an jeder Außenseite 2 jeweils einen nach außen abragenden Kameraarm 3 auf, wobei in der Perspektivdarstellung gemäß Fig. 1 nur einer der beiden Kameraarme 3 ersichtlich ist. In Fig. 2 ist einer der beiden Kameraarme 3, in Fahrzeug-Längsrichtung x gesehen, von hinten gezeigt. Jeder Kameraarm 3 weist eine, in Fahrzeug-Längsrichtung x gesehen, nach hinten gerichtete Kamera 5 und eine schräg, in Fahrzeug-Hochrichtung z gesehen, nach unten sowie, in Fahrzeug-Querrichtung y gesehen, nach außen gerichtete Kamera 7 auf. Die Bilder der beiden Kameras 5 und 7 können an einen Fahrer der Sattelzugmaschine 1 ausgegeben werden und ermöglichen diesem eine verbesserte Sicht in die unmittelbare Umgebung der Sattelzugmaschine 1. Die Kamera 5 ist dabei derart, in Fahrzeug-Querrichtung y gesehen, mit einem definierten Querversatz Δy seitlich von der Außenwand 2 der Sattelzugmaschine 1 abragend angeordnet und derart, in Fahrzeug-Längsrichtung x gesehen, nach hinten ausgerichtet, dass ein in Fig. 3 und Fig. 4 gezeigter Sattelauflieger 9 in wenigstens einem Teil seiner möglichen Fahrstellungen im Bild der Kamera 5 erfasst werden kann.

Des Weiteren ist die Kamera 5 signaltechnisch mit einer in den Figuren nicht gezeigten BildVerarbeitungsvorrichtung gekoppelt. Mittels der Bild-Verarbeitungsvorrichtung können aus den Bildern der Kamera 5 Abmessungs- und/oder Aufbau- und/oder Ladungs-Kenngrößen der Sattelzugmaschine 1 und des Sattelaufliegers 9 extrahiert werden. So können beispielsweise die Länge und die Höhe des Sattelaufliegers 9 als Kenngrößen ermittelt werden, um hier lediglich zwei Beispiele für Kenngrößen zu nennen. Diese Kenngrößen können dem Fahrer der Sattelzugmaschine 1 mittels einer in den Figuren nicht gezeigten Ausgabeeinrichtung ausgegeben werden, so dass der Fahrer der Sattelzugmaschine 1 stets über die Länge und die Höhe des mit der Sattelzugmaschine 1 gekoppelten Sattelaufliegers 9 informiert ist.

Anhand Fig. 3 wird nun die Ermittlung der Länge des Sattelaufliegers 9 erläutert. In Fig. 3 ist ein Bild 11 der Kamera 5 gezeigt, in dem der Sattelauflieger 9 erfasst ist. Zur Ermittlung der Länge des Sattelaufliegers 9 wird von der Bild-Verarbeitungseinrichtung zunächst eine Bildspalte 13 des Bildes 11 ermittelt, die mit einer, in Fahrzeug-Längsrichtung x gesehen, hinteren vertikalen, in Fig. 3 gestrichelt dargestellten Außenkante 15 des Sattelaufliegers 9 übereinstimmt bzw. zur Außenkante 15 des Sattelaufliegers 9 nächstliegend ist. Dann wird mittels der Bild-Verarbeitungseinrichtung ein Querversatz Δy zwischen einem, in Fahrzeugquerrichtung y gesehen, inneren Bildrand 17 des Bildes 11 und der Bildspalte 13 des Bildes 11 bzw. die Position der Außenkante 15 in dem Bild 11 bestimmt. Aus dem geometrischen Zusammenhang der Position der Außenkante 15 in dem Bild 11 und dem während der Erfassung des Bildes 11 gefahrenen Kurvenradius wird dann mittels der Bild-Verarbeitungseinrichtung die Länge des Sattelaufliegers 9 ermittelt. Der gefahrene Kurvenradius kann dabei beispielhaft ebenfalls aus dem Bild 11 extrahiert werden. Durch die Ermittlung der Länge des Sattelaufliegers 9 kann weiterhin auch auf die Gesamtlänge des sich aus der Sattelzugmaschine 1 und dem Sattelauflieger 9 gebildeten Sattelzugs geschlossen werden. Alternativ kann anstatt dem gefahrenen Kurvenradius auch der relative Gierwinkel zwischen Zugfahrzeug und Anhänger/Auflieger zur Ermittlung der Länge des Anhängers/Aufliegers verwendet werden. Dieser Gierwinkel kann ebenfalls mittels der Bildverarbeitungsvorrichtung aus den Bildern einer Bild-Erfassungseinrichtung ermittelt werden. Weiter alternativ kann die Kamera 7 auch als Stereokamera ausgebildet sein, wodurch zur Ermittlung der Länge des Anhängers/Aufliegers auf den Wert des gefahrenen Kurvenradius bzw. des relativen Gierwinkels verzichtet werden kann.

Anhand der Fig. 4 wird die Ermittlung der Höhe des Sattelaufliegers 9 erläutert. In Fig. 4 ist wiederum das Bild 11 der Kamera 5 gezeigt, in dem der Sattelauflieger 9 erfasst ist. Zur Ermittlung der Höhe des Sattelaufliegers 9 wird von der Bild-Verarbeitungseinrichtung zunächst wieder die Bildspalte 13 des Bildes 11 ermittelt, die mit der hinteren vertikalen Außenkante 15 des Sattelaufliegers 9 übereinstimmt. Anschließend wird eine Bildzeile 19 ermittelt, die einen, in Fahrzeughochrichtung z gesehen, oberen Endpunkt der Außenkante 15 schneidet, und ein Höhenversatz Δz zwischen einem, in Fahrzeughochrichtung z gesehen, oberen Bildrand 21 des Bildes 11 und der Bildzeile 19 des Bildes 11 bzw. die Position des oberen Endpunktes der Außenkante 15 in dem Bild 11 bestimmt. Aus der Höhenposition der Kamera 5, relativ zur Fahrbahn, dem während der Erfassung des Bildes 11 gefahrenen Kurvenradius, der Länge des Sattelaufliegers 9 und der Position des oberen Endpunktes der Außenkante 15 wird dann mittels der Bild-Verarbeitungseinrichtung die Höhe des Sattelaufliegers 9 ermittelt. Eine genaue Ermittlung der Höhenposition der Kamera 5 kann beispielsweise durch die Erfassung der Fahrbahn mittels der Kamera 7 im Bild und der Verarbeitung der Bilder der Kamera 7 mittels der Bild-Verarbeitungsvorrichtung erfolgen. Alternativ kann anstatt dem gefahrenen Kurvenradius auch der relative Gierwinkel zwischen Zugfahrzeug und Anhänger/Auflieger zur Ermittlung der Höhe des Anhängers/Aufliegers verwendet werden. Dieser Gierwinkel kann ebenfalls mittels der Bildverarbeitungsvorrichtung aus den Bildern einer Bild-Erfassungseinrichtung ermittelt werden. Weiter alternativ kann die Kamera 7 auch als Stereokamera ausgebildet sein, wodurch zur Ermittlung der Höhe des Anhängers/Aufliegers auf den Wert des gefahrenen Kurvenradius bzw. des relativen Gierwinkels verzichtet werden kann.

### Bezugszeichenliste

- 1: Sattelzugmaschine
- 2: Außenseite
- 3: Kameraarm
- 5: erste Kamera
- 7: zweite Kamera
- 9: Sattelauflieger
- 11: Bild
- 13: Bildspalte
- 15: Außenkante
- 17: innerer Bildrand
- 19: Bildzeile
- 21: oberer Bildrand
- Δy: Querversatz
- Δz: Höhenversatz

## Patentansprüche

1. Verfahren zur Unterstützung eines Fahrers eines Nutzfahrzeuges, wobei das Nutzfahrzeug (1, 9) wenigstens eine Bild-Erfassungseinrichtung (5) aufweist, wobei aus den mittels der wenigstens einen Bild-Erfassungseinrichtung (5) erfassten Bildern (11) mittels einer Bild-Verarbeitungsvorrichtung wenigstens eine Abmessungs- und/oder Aufbau- und/oder Ladungs-Kenngröße des Nutzfahrzeuges (1, 9) extrahiert wird, wobei die wenigstens eine Bild-Erfassungseinrichtung (5) und die Bild-Verarbeitungsvorrichtung derart ausgebildet sind, dass mittels diesen die Länge eines Anhängers/Aufliegers (9) des Nutzfahrzeugs (1, 9) als Kenngröße des Nutzfahrzeuges (1, 9) ermittelt wird, wobei das Nutzfahrzeug (1, 9) ein Nutzfahrzeug-Gespann mit einem Zugfahrzeug (1) und einem damit gekoppelten Anhänger/Auflieger (9) ist, wobei die wenigstens eine Bild-Erfassungseinrichtung (5) dem Zugfahrzeug (1) zugeordnet ist, und wobei die wenigstens eine Bild-Erfassungseinrichtung (5), in Fahrzeug-Längsrichtung (x) gesehen, derart nach hinten ausgerichtet ist, dass der Anhänger/Auflieger (9) zumindest in wenigstens einem Teil der möglichen Fahrstellungen zumindest teilweise im Bild (11) erfasst wird und wobei diese Kenngröße dergestalt ermittelt wird, dass eine, in Fahrzeug-Längsrichtung (x) gesehen, hintere vertikale Außenkante (15) des Anhängers/Aufliegers (9) von der Bild-Erfassungseinrichtung (5) im Bild (11) erfasst wird, und dass mittels der Bild-Verarbeitungseinrichtung aus dem geometrischen Zusammenhang der Position der Außenkante (15) im Bild (11) und dem während der Erfassung des Bildes (11) gefahrenen Kurvenradius und/oder relativen Gierwinkel zwischen Zugfahrzeug (1) und Anhänger/Auflieger (9) die Länge des Anhängers/Aufliegers (9) ermittelt wird.

2. Verfahren nach Anspruch 1, wobei die wenigstens eine Bild-Erfassungseinrichtung (5) und die Bild-Verarbeitungsvorrichtung ferner derart ausgebildet sind, dass die Höhe des Anhängers/Aufliegers (9) des Nutzfahrrzeuges (1, 9) als weitere Kenngröße des Nutzfahrzeuges ermittelt wird, und diese weitere Kenngröße dergestalt ermittelt wird, dass ein, in Fahrzeug-Hochrichtung (z) gesehen, oberer Endbereich einer, in Fahrzeug-Längsrichtung (x) gesehen, hinteren vertikalen Außenkante (15) des Anhängers/Aufliegers (9) oder ein oberer hinterer Eckbereich des Anhängers/Aufliegers (9) von einer Bild-Erfassungseinrichtung (5) im Bild (11) erfasst wird, und dass mittels der Bild-Verarbeitungseinrichtung aus der Höhenposition der Bild-Erfassungseinrichtung (5) relativ zur Fahrbahn, dem während der Erfassung des Bildes (11) gefahrenen Kurvenradius und/oder relativen Gierwinkel zwischen Zugfahrzeug (1) und Anhänger/Auflieger (9), der Länge des Anhängers/Aufliegers (9) und der Position des Außenkanten-Endbereichs und/oder des Anhänger/Auflieger-Eckbereichs im Bild (11) die Höhe des Anhängers/Aufliegers (9) ermittelt wird.

3. Verfahren nach Anspruch 2, wobei die Höhenposition der Bild-Erfassungseinrichtung (5) relativ zur Fahrbahn dergestalt ermittelt wird,
dass die Fahrbahn im Bild einer Bild-Erfassungseinrichtung (5) erfasst wird,
und dass mittels der Bild-Verarbeitungseinrichtung die Höhenposition der die Fahrbahn im Bild (11) erfassenden Bild-Erfassungseinrichtung (5) relativ zur Fahrbahn ermittelt wird, wobei im Falle mehrerer Bild-Erfassungseinrichtungen (5) ausgehend von derjenigen Bild-Erfassungseinrichtung (5), deren Höhenposition bekannt ist, mittels bekannter geometrischer Lagebeziehungen zwischen den einzelnen Bild-Erfassungseinrichtungen (5) die Höhenposition der wenigstens einen weiteren Bild-Erfassungseinrichtung (5) ermittelbar ist.

4. Verfahren nach einem der vorhergehenden Ansprüche, wobei die wenigstens eine Bild-Erfassungseinrichtung (5) und die Bild-Verarbeitungsvorrichtung ferner derart ausgebildet sind, dass die Art des Anhängers/Aufliegers (9) des Nutzfahrzeuges (1, 9) als weitere Kenngröße des Nutzfahrzeuges ermittelt wird, und diese weitere Kenngröße dergestalt ermittelt wird,
dass der Anhänger/Auflieger (9), in Fahrzeug-Querrichtung (y) gesehen, in Seitenansicht von einer Bild-Erfassungseinrichtung (5) im Bild (11) erfasst wird,
und dass mittels der Bild-Verarbeitungseinrichtung durch den Abgleich dieses Bildes (11) mit hinterlegten Erkennungsmustern die Art des Anhängers/Aufliegers (9) ermittelt wird.

5. Verfahren nach einem der vorhergehenden Ansprüche, wobei die wenigstens eine Bild-Erfassungseinrichtung (5) und die Bild-Verarbeitungsvorrichtung ferner derart ausgebildet sind, dass die Anzahl der Achsen des Anhängers/Aufliegers (9) des Nutzfahrzeuges (1, 9) als weitere Kenngröße des Nutzfahrzeuges ermittelt wird, und diese weitere Kenngröße dergestalt ermittelt wird,
dass wenigstens die, in Fahrzeug-Querrichtung (y) gesehen, auf einer Seite des Anhängers/Aufliegers (9) angeordneten Räder des Anhängers/Aufliegers (9) von einer Bild-Erfassungseinrichtung (5) im Bild (11) erfasst werden,
und dass mittels der Bild-Verarbeitungseinrichtung die Anzahl der Räder auf zumindest einer Seite des Anhängers/Aufliegers (9) im Bild (11) erkannt und ausgehend von dieser Anzahl die Anzahl der Achsen des Anhängers/Aufliegers (9) ermittelt wird.

6. Verfahren nach einem der vorhergehenden Ansprüche, wobei die wenigstens eine Bild-Erfassungseinrichtung (5) und die Bild-Verarbeitungsvorrichtung ferner derart ausgebildet sind, dass die Anzahl der angehobenen Lift-Achsen des Nutzfahrzeuges (1, 9) als weitere Kenngröße des Nutzfahrzeuges ermittelt wird, und diese weitere Kenngröße dergestalt ermittelt wird,
dass wenigstens die, in Fahrzeug-Querrichtung (y) gesehen, auf einer Seite des Nutzfahrzeuges (1, 9) angeordneten Räder des Nutzfahrzeuges (1, 9) und die Fahrbahn von einer Bild-Erfassungseinrichtung (5) im Bild (11) erfasst werden,
und dass mittels der Bild-Verarbeitungseinrichtung die Anzahl der nicht auf der Fahrbahn aufsetzenden Räder auf zumindest einer Seite des Nutzfahrzeuges (1, 9) im Bild (11) erkannt und ausgehend von dieser Anzahl die Anzahl der angehobenen Lift-Achsen des Nutzfahrzeuges (1, 9) ermittelt wird.

7. Verfahren nach einem der vorhergehenden Ansprüche, wobei die wenigstens eine Bild-Erfassungseinrichtung (5) und die Bild-Verarbeitungsvorrichtung ferner derart ausgebildet sind, dass die Breite des Nutzfahrzeuges (1, 9) und/oder der Nutzfahrzeug-Ladung als weitere Kenngröße des Nutzfahrzeuges ermittelt wird, und diese weitere Kenngröße dergestalt ermittelt wird,
dass wenigstens ein definiertes Breiten-Bildmerkmal von einer Bild-Erfassungseinrichtung (5) im Bild (11) erfasst wird,
und dass mittels der Bild-Verarbeitungseinrichtung durch den Abgleich des wenigstens einen definierten Breiten-Bildmerkmals mit hinterlegten Erkennungsmustern die Breite des Nutzfahrzeuges (1, 9) und/oder der Nutzfahrzeug-Ladung ermittelt wird.

8. Verfahren nach einem der vorhergehenden Ansprüche, wobei die wenigstens eine Bild-Erfassungseinrichtung (5) und die Bild-Verarbeitungsvorrichtung ferner derart ausgebildet sind, dass enngröße ein an dem Nutzfahrzeug (1, 9) und/oder an der Nutzfahrzeug-Ladung angebrachter Hinweis zur Nutzfahrzeug-Ladung als weitere Kenngröße des Nutzfahrzeuges ermittelt wird, und diese weitere Kenngröße dergestalt ermittelt wird, dass der an dem Nutzfahrzeug (1, 9) und/oder an der Nutzfahrzeug-Ladung angebrachter Hinweis zur Nutzfahrzeug-Ladung von einer Bild-Erfassungseinrichtung (5) im Bild (11) erfasst wird, und dass mittels der Bild-Verarbeitungseinrichtung durch den Abgleich des Hinweises zur Nutzfahrzeug-Ladung mit hinterlegten Erkennungsmustern der Hinweis zur Nutzfahrzeug-Ladung ermittelt wird.

9. Nutzfahrzeug-Gespann mit einem Zugfahrzeug (1) und einem damit gekoppelten Anhänger/Auflieger (9), wobei das Zugfahrzeug (1) wenigstens eine Bild-Erfassungseinrichtung (5) aufweist, die in Fahrzeug-Längsrichtung (x) gesehen derart nach hinten ausgerichtet ist, dass der Anhänger/ Auflieger (9) zumindest in wenigstens einem Teil der möglichen Fahrstellungen zumindest teilweise im Bild (11) erfassbar ist, und mit einer Bild-Verarbeitungseinrichtung, wobei das Nutzfahrzeugs-Gespann ausgebildet ist zur Durchführung des Verfahrens nach einem der vorhergehenden Ansprüche.

10. Nutzfahrzeug-Gespann nach Anspruch 9, wobei die wenigstens eine Bild-Erfassungseinrichtung (5), in Fahrzeug-Querrichtung (y) gesehen, mit einem definierten Querversatz (Δy) seitlich vom Zugfahrzeug (1) abragend angeordnet ist, und/oder dass die wenigstens eine Bild-Erfassungseinrichtung (5), in FahrzeugHochrichtung (z) gesehen, im Wesentlichen auf Höhe der Außenspiegel des Zugfahrzeuges (1) angeordnet ist.

## Claims

1. Method for assisting a driver of a commercial vehicle, wherein the commercial vehicle (1, 9) has at least one image-capturing device (5), wherein at least one dimension characteristic variable and/or structure characteristic variable and/or cargo characteristic variable of the commercial vehicle (1, 9) is extracted by means of an image-processing device from the images (11) which are captured by means of the at least one image-capturing device (5), wherein the at least one image-capturing device (5) and the image-processing device are embodied in such a way that the length of a trailer/semitrailer (9) of the commercial vehicle (1, 9) is determined by means of them as a characteristic variable of the commercial vehicle (1, 9), wherein the commercial vehicle (1, 9) is a commercial vehicle combination having a towing vehicle (1) and a trailer/semitrailer (9) which is coupled thereto, wherein the at least one image-capturing device (5) is assigned to the towing vehicle (1), and wherein the at least one image-capturing device (5), when viewed in the longitudinal direction (x) of the vehicle, is oriented towards the rear in such a way that the trailer/semitrailer (9) is captured at least partially in the image (11), at least in at least some of the possible driving positions, and wherein this characteristic variable is determined in such a way that a rear vertical outer edge (15) of the trailer/semitrailer (9), when viewed in the longitudinal direction (x) of the vehicle, is captured in the image (11) by the image-capturing device (5), and that the length of the trailer/semitrailer (9) is determined, by means of the image-processing device, from the geometrical relationship between the position of the outer edge (15) in the image (11) and the bend radius travelled along during the capturing of the image (11) and/or the relative yaw angle between the towing vehicle (1) and trailer/semitrailer (9).

2. Method according to Claim 1, wherein the at least one image-capturing device (5) and the image-processing device are also embodied in such a way that the height of the trailer/semitrailer (9) of the commercial vehicle (1, 9) is determined as a further characteristic variable of the commercial vehicle, and this further characteristic variable is determined in such a way that an upper end region, when viewed in the vertical direction (z) of the vehicle, of a rear vertical outer edge (15) of the trailer/semitrailer (9) or an upper rear corner region of the trailer/semitrailer (9), when viewed in the longitudinal direction (x) of the vehicle, is captured in the image (11) by an image-capturing device (5), and that the height of the trailer/semitrailer (9) is determined in the image (11), by means of the image-processing device, from the vertical position of the image-capturing device (5) relative to the carriageway, the bend radius travelled along during the capturing of the image (11) and/or the relative yaw angle between the towing vehicle (1) and trailer/semitrailer (9), the length of the trailer/semitrailer (9) and the position of the outer edge end region and/or of the trailer/semitrailer corner region.

3. Method according to Claim 2, wherein the vertical position of the image-capturing device (5) relative to the carriageway is determined in such a way that the carriageway is captured in the image of an image-capturing device (5), and that the vertical position of the image-capturing device (5), which captures the carriageway in the image (11), relative to the carriageway, is determined by means of the image-processing device, wherein in the case of a plurality of image-capturing devices (5), on the basis of that image-capturing device (5) whose vertical position is known, the vertical position of the at least one further image-capturing device (5) can be determined by means of known geometrical positional relationships between the individual image-capturing devices (5).

4. Method according to one of the preceding claims, wherein the at least one image-capturing device (5) and the image-processing device are also embodied in such a way that the type of the trailer/semitrailer (9) of the commercial vehicle (1, 9) is determined as a further characteristic variable of the commercial vehicle, and this further characteristic variable is determined in such a way that the trailer/semitrailer (9), when viewed in the transverse direction (y) of the vehicle, is captured in a side view in the image (11) by an image-capturing device (5), and that the type of the trailer/semitrailer (9) is determined by means of the image-processing device by comparing this image (11) with stored detection patterns.

5. Method according to one of the preceding claims, wherein the at least one image-capturing device (5) and the image-processing device are also embodied in such a way that the number of axles of the trailer/semitrailer (9) of the commercial vehicle (1, 9) is determined as a further characteristic variable of the commercial vehicle, and this further characteristic variable is determined in such a way that at least the wheels of the trailer/semitrailer (9) which, when viewed in the transverse direction (y) of the vehicle, are arranged on one side of the trailer/semitrailer (9) are captured in the image (11) by an image-capturing device (5), and that, by means of the image-processing device, the number of wheels on at least one side of the trailer/semitrailer (9) is detected in the image (11), and the number of axles of the trailer/semitrailer (9) is determined on the basis of this number.

6. Method according to one of the preceding claims, wherein the at least one image-capturing device (5) and the image-processing device are also embodied in such a way that the number of raised lifting axles of the commercial vehicle (1, 9) is determined as a further characteristic variable of the commercial vehicle, and this further characteristic variable is determined in such a way that at least the wheels of the commercial vehicle (1, 9) which, when viewed in the transverse direction (y) of the vehicle, are arranged on one side of the commercial vehicle (1, 9), and the carriageway are captured in the image (11) by an image-capturing device (5), and that, by means of the image-processing device, the number of wheels which are not set down on the carriageway on at least one side of the commercial vehicle (1, 9) is detected in the image (11), and the number of raised lifting axles of the commercial vehicle (1, 9) is determined on the basis of this number.

7. Method according to one of the preceding claims, wherein the at least one image-capturing device (5) and the image-processing device are also embodied in such a way that the width of the commercial vehicle (1, 9) and/or of the commercial vehicle cargo is determined as a further characteristic variable of the commercial vehicle, and this further characteristic variable is determined in such a way that at least one defined width image feature is captured in the image (11) by an image-capturing device (5), and that, by means of the image-processing device, the width of the commercial vehicle (1, 9) and/or of the commercial vehicle cargo is determined by comparing the at least one defined width image feature with stored detection patterns.

8. Method according to one of the preceding claims, wherein the at least one image-capturing device (5) and the image-processing device are also embodied in such a way that that an indication of the commercial vehicle cargo, which is mounted on the commercial vehicle (1, 9) and/or on the commercial vehicle cargo, is determined as a further characteristic variable of the commercial vehicle, and this further characteristic variable is determined in such a way that the indication of the commercial vehicle cargo which is mounted on the commercial vehicle (1, 9) and/or on the commercial vehicle cargo is captured in the image (11) by an image-capturing device (5), and that, by means of the image-processing device, the indication of the commercial vehicle cargo is determined by comparing the indication of the commercial vehicle cargo with stored detection patterns.

9. Commercial vehicle combination having a towing vehicle (1) and a trailer/semitrailer (9) which is coupled thereto, wherein the towing vehicle (1) has at least one image-capturing device (5), which, when viewed in the longitudinal direction (x) of the vehicle, is oriented towards the rear in such a way that the trailer/semitrailer (9) can be captured at least partially in the image (11), at least in at least some of the possible driving positions, and having an image-processing device, wherein the commercial vehicle combination is embodied for carrying out the method according to one of the preceding claims.

10. Commercial vehicle combination according to Claim 9, wherein the at least one image-capturing device (5), when viewed in the transverse direction (y) of the vehicle, is arranged projecting laterally from the towing vehicle (1) with a defined transverse offset (Δy), and/or that the at least one image-capturing device (5), when viewed in the vertical direction (z) of the vehicle, is arranged essentially at the height of the exterior rearview mirror of the towing vehicle (1).

## Revendications

1. Procédé d'assistance d'un conducteur de véhicule utilitaire, le véhicule utilitaire (1, 9) comportant au moins un moyen d'acquisition d'images (5), au moins un paramètre de dimension et/ou de structure et/ou de charge du véhicule utilitaire (1, 9) étant extrait des images (11), acquises au moyen de l'au moins un moyen d'acquisition d'images (5), à l'aide d'un dispositif de traitement d'images,
l'au moins un moyen d'acquisition d'images (5) et le dispositif de traitement d'images étant conçus de manière à déterminer la longueur d'une remorque/semi-remorque (9) du véhicule utilitaire (1, 9) comme paramètre du véhicule utilitaire (1, 9),
le véhicule utilitaire (1, 9) étant un attelage formant véhicule utilitaire qui comprend un tracteur (1) et une remorque/semi-remorque (9) accouplée à celui-ci, l'au moins un moyen d'acquisition d'images (5) étant associé au tracteur (1), et l'au moins un moyen d'acquisition d'images (5) étant orienté vers l'arrière par référence à la direction longitudinale (x) du véhicule de manière à acquérir la remorque/semi-remorque (9) au moins partiellement dans l'image (11) au moins dans une partie des positions de roulement possibles et
ce paramètre étant déterminé de manière à ce qu'un bord extérieur vertical arrière (15) de la remorque/semi-remorque (9), par référence à la direction longitudinale (x) du véhicule, soit acquis dans l'image (11) par le moyen d'acquisition d'images (5), et de manière à ce que la longueur de la remorque/semi-remorque (9) soit déterminée à l'aide du dispositif de traitement d'images à partir de la relation géométrique entre la position du bord extérieur (15) dans l'image (11) et le rayon de courbure et/ou l'angle de lacet relatif entre le tracteur (1) et la remorque/semi-remorque (9), parcouru lors de l'acquisition de l'image (11).

2. Procédé selon la revendication 1, l'au moins un moyen d'acquisition d'images (5) et le dispositif de traitement d'images étant en outre conçus de manière à ce que la hauteur de la remorque/semi-remorque (9) du véhicule utilitaire (1, 9) soit déterminée comme autre paramètre du véhicule utilitaire, et cet autre paramètre étant déterminé de manière à ce qu'une zone d'extrémité supérieure, par référence à la direction verticale (z) du véhicule, d'un bord extérieur vertical arrière (15) de la remorque/semi-remorque, par référence à la direction longitudinale (x) du véhicule, ou une zone de coin supérieure arrière de la remorque/semi-remorque (9) soit acquise dans l'image (11) par un moyen d'acquisition d'images (5), et de manière à ce que la hauteur de la remorque/semi-remorque (9) soit déterminée à l'aide du dispositif de traitement d'images à partir de la position en hauteur du moyen d'acquisition d'images (5) par rapport à la chaussée, au rayon de courbe parcourue lors de l'acquisition de l'image (11) et/ou à l'angle de lacet relatif entre le tracteur (1) et la remorque/semi-remorque (9), à la longueur de la remorque/semi-remorque (9) et à la position de la zone d'extrémité du bord extérieur et/ou de la zone d'angle de la remorque/semi-remorque dans l'image (11).

3. Procédé selon la revendication 2, la position en hauteur du moyen d'acquisition d'images (5) étant déterminée par rapport à la chaussée de manière à ce que la chaussée soit acquise dans l'image d'un moyen d'acquisition d'images (5), et de manière à ce que la position en hauteur du moyen d'acquisition d'images (5), acquérant la chaussée dans l'image (11), par rapport à la chaussée soit déterminée à l'aide du dispositif de traitement d'images, dans le cas de plusieurs moyens d'acquisition d'images (5) la position en hauteur de l'au moins un autre moyen d'acquisition d'images (5) pouvant être déterminée à partir du moyen d'acquisition d'images (5), dont la position en hauteur est connue, à l'aide de relations de position géométriques connues entre les différents moyens d'acquisition d'images (5).

4. Procédé selon l'une des revendications précédentes, l'au moins un moyen d'acquisition d'images (5) et le dispositif de traitement d'images étant en outre conçus de manière à ce que le type de remorque/semi-remorque (9) du véhicule utilitaire (1, 9) soit déterminé comme autre paramètre du véhicule utilitaire, et cet autre paramètre étant déterminé de manière à ce que la remorque/semi-remorque (9), par référence à la direction transversale (y) du véhicule, soit acquise dans l'image (11) en vue latérale par un moyen d'acquisition d'images (5), et de manière à ce que le type de remorque/semi-remorque (9) soit déterminé à l'aide du dispositif de traitement d'images par comparaison de cette image (11) à des modèles d'identification en mémoire.

5. Procédé selon l'une des revendications précédentes, l'au moins un moyen d'acquisition d'images (5) et le dispositif de traitement d'images étant en outre conçus de manière à ce que le nombre d'essieux de la remorque/semi-remorque (9) du véhicule utilitaire (1, 9) soit déterminé comme autre paramètre du véhicule utilitaire, et cet autre paramètre étant déterminé de manière à ce qu'au moins les roues de la remorque/semiremorque (9), disposées d'un côté de la remorque/semi-remorque (9) par référence à la direction transversale (y) du véhicule, soient acquises dans l'image (11) par un moyen d'acquisition d'images (5) et de manière à ce que le nombre de roues sur au moins un côté de la remorque/semi-remorque (9) soit acquis dans l'image (11) à l'aide du dispositif de traitement d'images et le nombre d'essieux de la remorque/semi-remorque (9) soit déterminé à partir de ce nombre.

6. Procédé selon l'une des revendications précédentes, l'au moins un moyen d'acquisition d'images (5) et le dispositif de traitement d'images étant en outre conçus de manière à ce que le nombre d'essieux relevables relevés du véhicule utilitaire (1, 9) soit déterminé comme autre paramètre du véhicule utilitaire, et cet autre paramètre étant déterminé de manière à ce qu'au moins les roues du véhicule utilitaire (1, 9), disposées sur un côté du véhicule utilitaire (1, 9) par référence à la direction transversale (y) du véhicule, et la chaussée soient acquises dans l'image (11) à l'aide d'un moyen d'acquisition d'images (5) et de manière à ce que le nombre de roues qui ne portent pas sur la chaussée sur au moins un côté du véhicule utilitaire (1, 9) soit acquis dans l'image (11) à l'aide du dispositif de traitement d'image et ce nombre permettant de déterminer le nombre d'essieux relevables relevés du véhicule utilitaire (1, 9).

7. Procédé selon l'une des revendications précédentes, l'au moins un moyen d'acquisition d'images (5) et le dispositif de traitement d'images étant en outre conçus de manière à ce que la largeur du véhicule utilitaire (1, 9) et/ou la charge du véhicule utilitaire soit déterminées comme autre paramètre du véhicule utilitaire, et cet autre paramètre étant déterminé de manière à ce qu'au moins une caractéristique d'image en largeur définie soit acquise dans l'image (11) par un moyen d'acquisition d'images (5) et de manière à ce que la largeur du véhicule utilitaire (1, 9) et/ou la charge du véhicule utilitaire soient déterminées à l'aide du dispositif de traitement d'images par comparaison de l'au moins une caractéristique d'image en largeur à des modèles d'identification en mémoire.

8. Procédé selon l'une des revendications précédentes, l'au moins un moyen d'acquisition d'images (5) et le dispositif de traitement d'images étant en outre conçus de manière à ce qu'une indication sur la charge du véhicule utilitaire, placée sur le véhicule utilitaire (1, 9) et/ou sur la charge du véhicule utilitaire, soit déterminées comme autre paramètre du véhicule utilitaire, et cet autre paramètre étant déterminé de manière à ce que l'indication placée sur le véhicule utilitaire (1, 9) et/ou sur la charge du véhicule utilitaire soit acquise dans l'image (11) par un moyen d'acquisition d'images (5), et de manière à ce que l'indication sur la charge du véhicule utilitaire soient déterminées à l'aide du dispositif de traitement d'images par comparaison de l'indication sur la charge du véhicule utilitaire à des modèles d'identification en mémoire.

9. Attelage formant véhicule utilitaire qui comprend un tracteur (1) et une remorque/semi-remorque (9) accouplée à celui-ci, le tracteur (1) comportant au moins un moyen d'acquisition d'images (5) qui est orienté vers l'arrière par référence à la direction longitudinale (x) du véhicule de manière à ce que la remorque/semi-remorque (9) puisse être acquise au moins partiellement dans l'image (11) dans au moins une partie des positions de roulement possibles, et un dispositif de traitement d'image, l'attelage formant véhicule utilitaire étant conçu pour mettre en oeuvre le procédé selon l'une des revendications précédentes.

10. Attelage formant véhicule utilitaire selon la revendication 9, l'au moins un moyen d'acquisition d'images (5) étant disposé en faisant saillie latéralement du tracteur (1) avec un décalage transversal défini (Δy) par référence à la direction transversale (y) du véhicule, et/ou de manière à ce que l'au moins un moyen d'acquisition d'images (5) soit disposé sensiblement au niveau des rétroviseurs extérieurs du tracteur (1) par référence à la direction verticale (z) du véhicule.
